# FASCICULE DE BREVET EUROPEEN

(11) **EP 2 953 855 B1**
(45) Date de publication et mention de la délivrance du brevet: **16.09.2020**
(21) Numéro de dépôt: 14702840.1
(22) Date de dépôt: 04.02.2014
(51) Int. Cl.: B64G 1/40, B64D 37/06, B65D 88/12, F17C 13/00

(54) **ENSEMBLE CONSTITUE D'UN RESERVOIR ET D'UN DISPOSITIF DE RETENUE DU RESERVOIR DANS UN AERONEF**
ANORDNUNG BESTEHEND AUS EINEM TANK UND EINER VORRICHTUNG ZUM HALTEN DES TANKS IN EINEM FLUGZEUG
ARRANGEMENT OF A TANK AND A DEVICE FOR RETAINING THE TANK IN AN AIRCRAFT

(30) Priorité: 05.02.2013 FR 1350988
(43) Date de publication de la demande: 16.12.2015
(73) Titulaire: ArianeGroup SAS, 75015 Paris (FR)
(72) Inventeur: FAURE, Benjamin, 33110 Le Bouscat (FR); BERTRAND, Jérôme, 33160 Saint Aubin de Medoc (FR); CORABOEUF, Yohann, 33700 Merignac (FR); CHEVROLLIER, Samuel, 65000 Tarbes (FR); ABADIE-LAHAILLE, Robert, 65360 Momeres (FR); MEZIERES, Pascal, 65000 Tarbes (FR); SANTERRE, Angélique, 33480 Listrac Medoc (FR)
(74) Mandataire: Brevalex
(86) Numéro de dépôt international: PCT/EP2014/052139
(87) Numéro de publication internationale: WO 2014/122124

(56) Documents cités:
- DE-A1- 10 134 773
- DE-B- 1 177 661
- US-A- 3 979 005
- US-A- 4 231 481
- US-A- 4 481 778
- US-A- 4 557 444

## Description

### Arrière plan de l'invention

### Domaine de l'invention

La présente invention a pour objet un dispositif de retenue d'un réservoir dans un aéronef et plus particulièrement adapté au maintien de réservoirs d'ergols cryogéniques dans un fuselage d'aéronef tel qu'un avion et notamment un avion spatial. Un tel dispositif appelé dans la technique considérée "dispositif de supportage", est adapté notamment pour supporter des réservoirs de forme cylindrique ou conique alimentant en ergols un moteur fusée d'un avion spatial.

Elle apporte une solution aux applications nécessitant le transport de liquides cryogéniques dans des aéronefs dans des contraintes d'encombrement et de masse très sévères et dont les cycles d'utilisation et de contrôle nécessitent une dépose et un remontage des réservoirs dans des délais courts.

Elle trouve particulièrement son application pour des véhicules spatiaux qui emportent de grandes quantités d'ergols cryogéniques utilisés pour la propulsion fusée de ces véhicules et pour lesquels l'optimisation de la masse sèche est un enjeu du premier ordre.

### Arrière plan technologique

Dans le domaine spatial, les réservoirs cryogéniques non structuraux d'étages de fusées sont classiquement interfacés avec la structure porteuse de l'étage les recevant via deux dispositifs de montage sous forme de jupes situées au dessus et au dessous du réservoir.

Ces dispositifs sont conçus pour autoriser des déplacements radiaux des points de fixation du réservoir induits par les déformations thermiques du réservoir cryogénique. L'interface supérieure autorise dans ce cadre des déplacements longitudinaux des points de fixation du réservoir alors que l'interface arrière ou inférieure est par contre fixe longitudinalement.

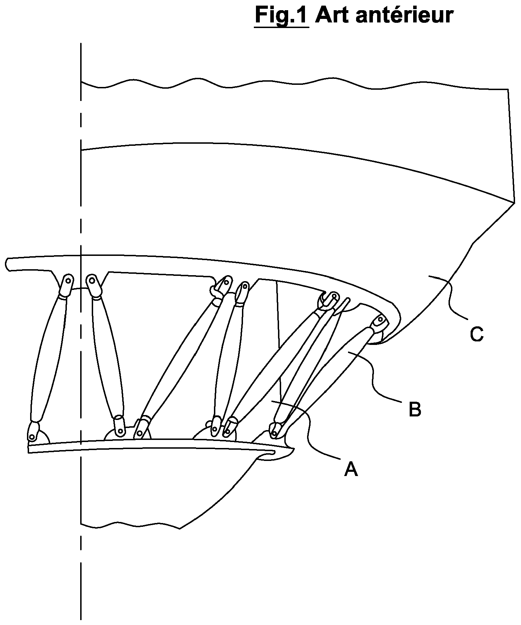

Ces dispositifs interface peuvent être des cônes ou des assemblages de bielles comme dans le cas de l'interface inter-réservoir de l'ESCA d'Ariane 5 tel que représenté en figure 1 demi vue en perspective pour laquelle un réservoir A est retenu par des bielles B sur une structure C ou peuvent aussi être des assemblages de tôles de liaison.

Ces solutions comportant de nombreux éléments de liaisons permettent une bonne distribution des charges aux interfaces, mais ont pour inconvénients majeurs un impact non négligeable sur la masse du véhicule et de nécessiter des temps d'opérations élevés pour le montage et le démontage des interfaces.

En outre, les fixations pour lanceurs classiques sont conçues pour des efforts essentiellement orientés selon l'axe du réservoir, alors que pour un avion spatial, les efforts ne sont pas seulement selon cet axe mais aussi perpendiculairement à cet axe et en roulis. De ce fait, les solutions lanceurs ne sont pas applicables en tant que telles à un aéronef de type avion spatial.

Ces dispositifs interface ne sont toutefois pas particulièrement bien adaptés pour compenser les contraintes induites par des dilatations thermiques différentielles qui ne sont pas nulles. Ils causent en outre des pertes thermiques non négligeables.

Enfin, ces dispositifs ne sont pas ou peu applicables à des installations où le volume disponible pour le dispositif de supportage est très réduit.

Dans le domaine du transport maritime, le document US 3 659 817 A décrit une solution de supportage d'un réservoir cryogénique qui consiste en un jeu de fixations, au moins 2x4 éléments de fixation, orientées tangentiellement à la peau du réservoir cryogénique et perpendiculairement à son axe principal, afin d'éviter la génération de contraintes de flexion dans cette même peau sous l'effet des variations d'orientations des charges dues aux mouvements continuels d'un bateau en mer.

Ce document ne décrit pas de moyens adaptés à reprendre les charges longitudinales suivant l'axe principal réservoir. En outre, les mouvements récurrents considérés sont d'une amplitude moindre par rapport à ce que rencontrerait par exemple un avion spatial entre la phase aéronautique et la phase spatiale, en particulier en tenant compte des exigences de certification aéronautiques. Enfin, certains des dispositifs de supportage proposés pour homogénéiser les contraintes peuvent se révéler très pénalisants en masse lorsqu'appliqués à des réservoirs de propulsion fusée. En effet, cette solution, comme la plupart des solutions usuellement retenues pour le supportage maritime de réservoirs cryogénique, pour le gaz naturel liquide essentiellement, ne permet pas une optimisation de l'ensemble de la masse réservoir+structure porteuse+éléments de supportage du niveau de celle recherchée pour le spatial ou l'aéronautique. Ceci s'explique notamment par le fait que les réservoirs utilisés dans le transport maritime sont d'une capacité de plusieurs centaines de m3 et donc de dimensions d'un ordre de grandeur supérieur aux réservoirs de quelques m3 seulement concernés par la présente invention. De même, les pertes thermiques, négligeables en regard des volumes transportés dans les transports maritimes ne le sont plus à l'échelle des véhicules aéronautiques et spatiaux.

Dans le domaine du montage de réservoirs dans un avion, les documents US 3 951 362 A et US 3 979 005 A s'appliquant à un réservoir toroïdal décrivent des moyens de supportage qui comprennent des supports de reprise d'efforts de cisaillement répartis sur la circonférence d'un réservoir cryogénique.

Ces supports sont constitués de tôles de forme incurvée de sorte à fournir la flexibilité nécessaire pour autoriser des déformations relatives radiales et garantir un travail purement en cisaillement.

Ces supports adaptés à des réservoirs avec fonds toroïdaux ne constituent qu'une partie du dispositif de supportage qui est plus complexe et nécessite l'addition dans l'avion soit d'une structure support de type conique, volumineuse et pénalisante en masse, soit la reprise des efforts à l'avant du réservoir sur un fond pressurisé dessiné et dimensionné pour assurer cette fonction et donc encore une fois lourd et encombrant.

DE 1177661B décrit un dispositif de support d'un réservoir cylindrique, composé d'un réseau de bielles disposées dans les axes principaux (X, Y et Z) du cylindre.

### Brève description de l'invention

L'utilisation d'ergols cryogéniques pour assurer tout ou partie de la propulsion d'un aéronef, ce qui est le cas par exemple d'un avion spatial avec moteur fusée assurant des missions suborbitales ou orbitales, nécessite d'installer des réservoirs dédiés, préférentiellement dans le fuselage de cet aéronef.

Au vu de l'art antérieur, la présente invention propose un ensemble constitué d'un réservoir pour un aéronef et en particulier un avion spatial et d'un dispositif de support et de maintien du réservoir selon la revendication 1, qui ajoute peu de volume au réservoir, qui est adapté à supporter et maintenir des réservoirs confinés dans des volumes réduits et qui permet des montages/démontages des réservoirs plusieurs fois dans la vie de l'aéronef.

Le rapport masse utile sur masse sèche conditionne au premier ordre la performance réalisable par de tels véhicules. Aussi, il est indispensable de concevoir un dispositif d'installation des réservoirs cryogéniques dans le fuselage le plus optimal possible en termes de masse.

Dans le même esprit, tout volume non utilisé est à proscrire, et les diamètres des réservoirs cryogéniques sont définis au plus près des diamètres fuselage, contraignant ainsi fortement l'aménagement de pièces d'interfaces.

Pour autant, l'inspection de ces dernières doit demeurer possible à chaque vol, et ce de façon aisée, de même que leur démontage et remontage qui va avoir lieu au moins quelques fois dans la vie de l'avion.

Toujours dans le souci de garantir la performance recherchée, le dispositif doit en particulier réduire au minimum l'évaporation des ergols cryogéniques par pertes thermiques entre les réservoirs et la structure porteuse.

Enfin, les fixations d'interfaces des réservoirs cryogéniques doivent être capables de répondre aux contraintes mentionnées ci-dessus sans générer de contraintes thermomécaniques dues aux dilatations différentielles entre les réservoirs et leur environnement, et malgré des accélérations importantes appliquées suivant des directions variables. Ces fixations doivent en effet répondre aux exigences de certification qui spécifient notamment des accélérations auxquelles la structure doit résister en cas d'atterrissage d'urgence, et au profil particulier des missions orbitales ou suborbitales qui comprennent une phase de propulsion fusée intervenant en nominal à chaque vol.

La présente invention concerne un dispositif de supportage de réservoirs de stockage ou transport de liquides cryogéniques, dans un fuselage d'avion et/ou de véhicule spatial, véhicules suborbitaux compris, apportant une réponse à la problématique exposée ci-avant.

Ce dispositif permet à la fois:
- un montage et un démontage relativement rapide et facile des réservoirs confinés dans un volume très restreints, ainsi que des opérations d'inspections rapides;
- la limitation des charges appliquées à la structure avion et surtout aux réservoirs d'ergols malgré des dilatations thermiques différentielles importantes, notamment une forte striction/raccourcissement des réservoirs soumis aux températures cryogéniques, et malgré un profil de chargement très variable: accélérations importantes appliquées dans l'axe du réservoir, par exemple lors des phases de propulsion spatiale, ou perpendiculairement à l'axe du réservoir, par exemple lors des phases aéronautiques classiques à forts coefficients de charge verticale ou les phases de descente à forte incidence;
- une optimisation des points d'accroche cohérente des axes principaux et structures porteuses de l'avion;
- une minimisation de l'impact masse globale, au niveau des points d'accroche en tant que tel, mais aussi des renforts nécessaires au niveau de la structure avion et des parties structurales des réservoirs; et,
- de répondre aux exigences de certification de l'aviation civile et notamment celles relatives à la tolérance de panne et celles relatives à la sécurité en cas de décélérations brutales ou d'atterrissage de détresse.

Les réservoirs concernés sont en particulier des réservoirs non structuraux, de forme cylindrique ou conique et avec fonds sphériques ou elliptiques.

Ils sont équipés d'éléments structuraux de fixation et de renfort comme une jupe ou des cerclages, capables de reprendre les efforts d'interface, et localisé à l'avant et à l'arrière du réservoir.

Le dispositif de la présente invention est pour ce faire un dispositif adapté pour retenir des réservoirs de réception d'ergols cryogéniques d'une capacité de quelques tonnes sans leur appliquer de contraintes s'opposant à leur contraction/dilatation longitudinale ou radiale.

Avantageusement, le dispositif de support et de maintien de réservoir comprend en outre un second deuxième moyen de retenue selon l'axe Y à la première extrémité du réservoir afin de constituer un moyen de retenue redondant de sécurité.

Les premiers moyens et le deuxième moyen sont avantageusement constitués par des bielles fixées au réservoir au moyen d'axes libres en rotation et disposées en sorte de permettre au réservoir de se dilater ou se contracter librement.

Selon un mode de réalisation particulier, à la première extrémité du réservoir, les bielles définissent trois points de fixation répartis au sommet et des deux côtés de la première extrémité du réservoir.

Les premiers moyens comportent avantageusement quatre bielles agencées de façon symétrique par rapport à des plans de symétrie ZY et ZX du réservoir et orientées selon l'axe Z pour reprendre des accélérations du réservoir suivant l'axe Z.

Selon un mode de réalisation particulier, les points de fixation desdites quatre bielles au réservoir sont localisés dans le plan de symétrie XY du réservoir.

Le deuxième moyen de retenue est avantageusement constitué par une bielle à l'avant du réservoir, positionnée dans le plan XY et reprenant les efforts suivant l'axe Y transverse à l'axe principal X du réservoir.

La bielle positionnée dans le plan XY, et les bielles orientées suivant l'axe Z, sont avantageusement positionnées en sorte d'autoriser des déformations du réservoir selon l'axe X tout en permettant un débattement radial du réservoir pour ne pas générer de contraintes dues aux déformations thermiques radiales du réservoir.

Le point de fixation de la bielle positionnée dans le plan XY sur le réservoir est avantageusement dans le plan de symétrie XZ du réservoir.

Les bielles sont avantageusement positionnées de façon à travailler tangentiellement à la peau du réservoir.

L'invention s'applique en particulier à un aéronef comportant un ensemble selon l'invention, pour lequel l'axe principal X est un axe horizontal parallèle à l'axe aéronef, ou présentant un angle faible par rapport à l'axe aéronef, l'axe Y est un axe horizontal transverse à l'aéronef et l'axe Z est un axe vertical les premiers et deuxième moyens étant repris sur des cadres du fuselage de l'aéronef.

Le réservoir est avantageusement suspendu aux premiers moyens de retenue.

Les premiers et deuxième moyens de retenue sont avantageusement des bielles fixées par des liaisons à rotule à des attaches du réservoir et des attaches sur des cadres de l'aéronef, ou sur des voiles amortisseurs entre cadres.

Avantageusement, la tige du troisième moyen de retenue est fixée sur un bâti de l'aéronef et la rotule sphérique est en bout d'une jupe solidaire du réservoir, pour lequel le bâti assure la transmission des efforts depuis la tige jusque dans le fuselage de l'aéronef et pour lequel la liaison à glissière reprend les efforts suivant les axes X et Y, tout en étant complètement libre en rotation et libre en translation autour de la tige suivant l'axe Z vertical.

Selon un mode de réalisation particulier, l'aéronef comporte une redondance de sécurité du troisième moyen de retenue qui est selon un mode de réalisation particulier réalisée par un dispositif pion, trou avec jeu situé entre la jupe, entre l'axe vertical et le réservoir, et un support fixé au fuselage en sorte de retenir le réservoir en X et en Y sur rupture de l'axe vertical ou de la jupe côté réservoir.

L'aéronef est avantageusement un aéronef spatial et le réservoir est un réservoir cryogénique d'alimentation d'un moteur fusée de l'aéronef spatial, les moyens de retenue étant configurés pour fournir des degrés de liberté adaptés à éviter des contraintes thermomécaniques sous l'effet des déformations thermiques différentielles dans le sens longitudinal et radial du réservoir.

Selon un mode de réalisation avantageux le bâti comporte une double bride.

### Brève description des dessins

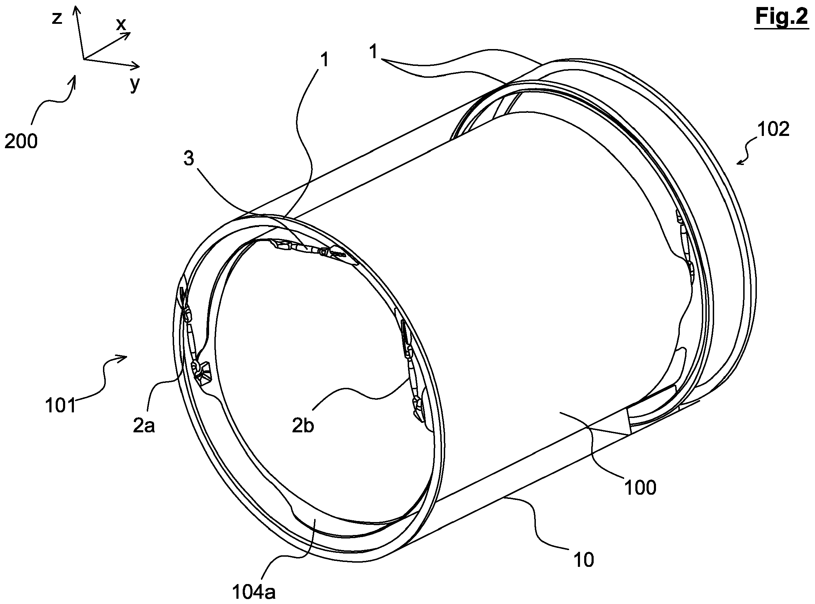

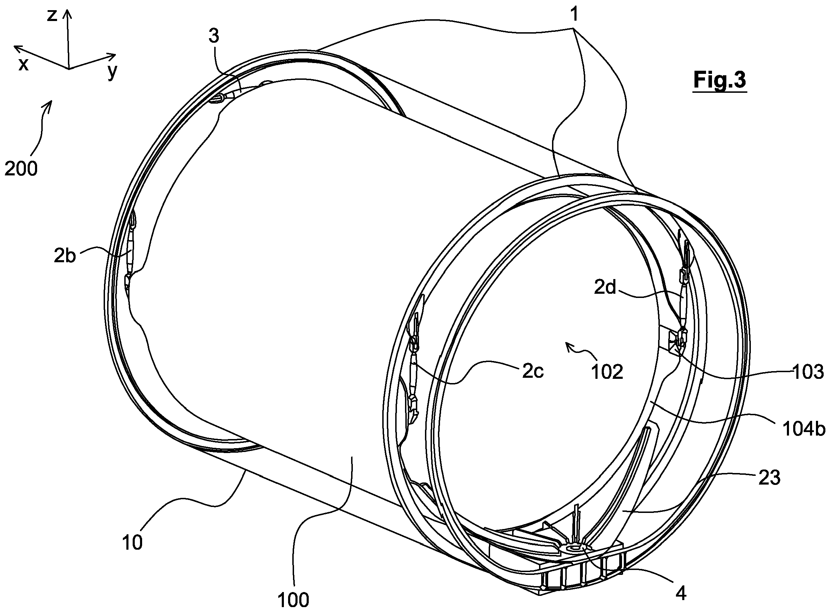

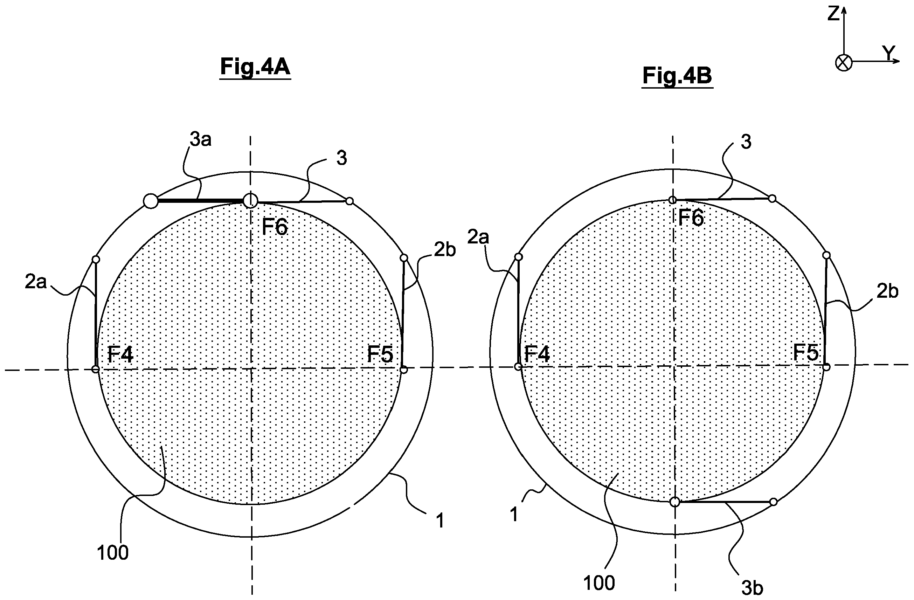

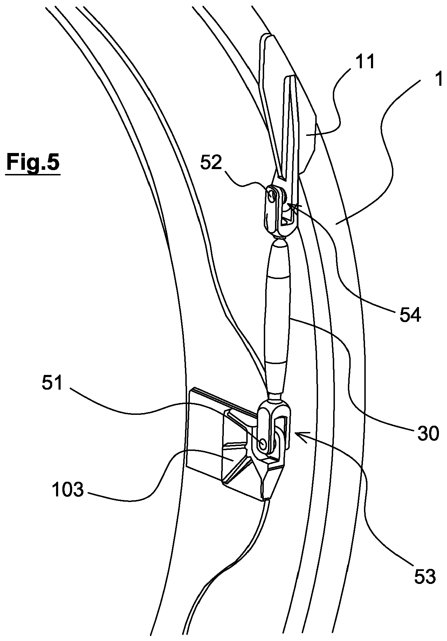

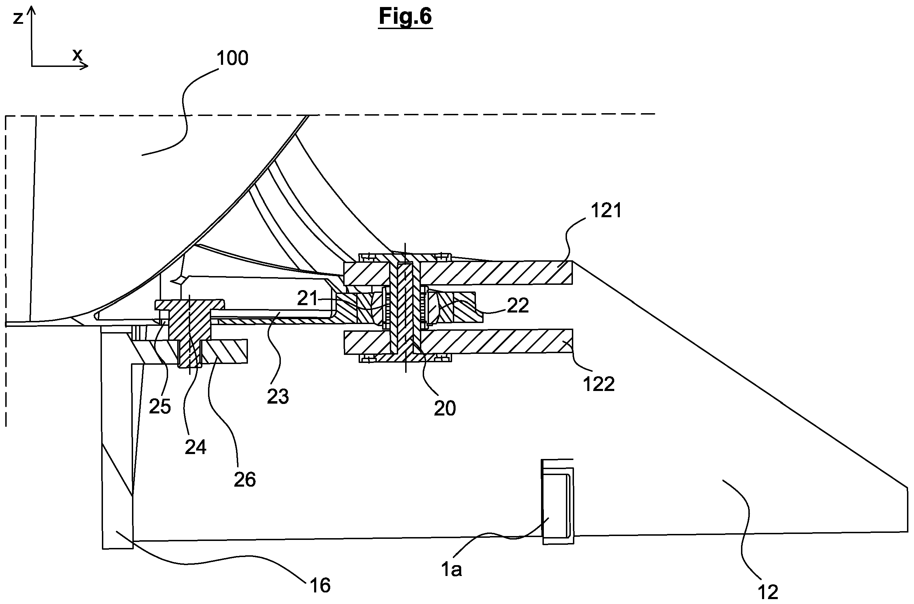

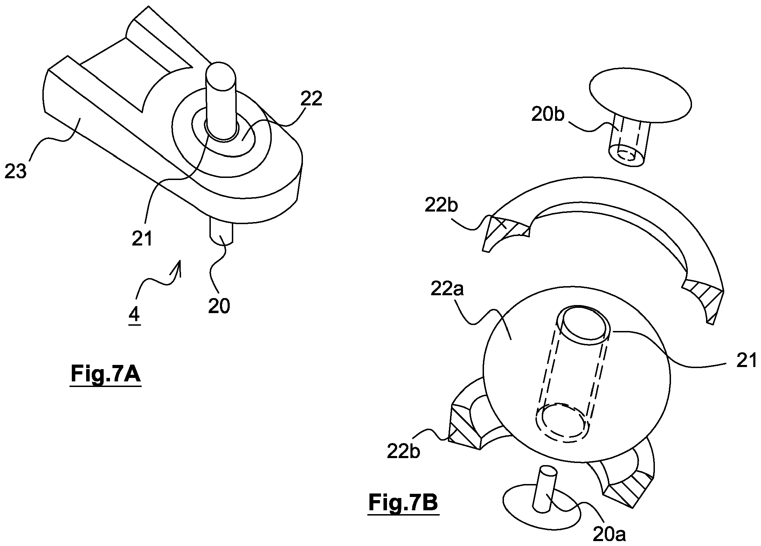

D'autres caractéristiques et avantages de l'invention seront apparents à la lecture de la description qui suit d'un exemple de réalisation non limitatif de l'invention accompagné des dessins qui représentent:
en figure 1 : un exemple de fixation de réservoir de lanceur de l'art antérieur;
en figure 2: une vue en perspective trois quart avant d'un réservoir avec un dispositif de support et de maintien selon l'invention;
en figure 3: une vue en perspective trois quart arrière d'un réservoir avec un dispositif de support et de maintien selon l'invention;
aux figures 4A et 4B: des vues schématiques des fixations à une première extrémité du réservoir selon deux modes de réalisation particuliers;
en figure 5: un détail d'un moyen de retenue selon l'invention;
en figure 6: une vue en coupe longitudinale d'un détail d'un troisième moyen de retenue à rotule de l'invention.
aux figures 7A et 7B: des vues respectivement en perspective et en éclaté du moyen de retenue de la figure 6.

### Description détaillée de modes de réalisation de l'invention

L'invention se rapporte à un dispositif de support et de maintien d'un réservoir 100 tel que représenté aux figures 2 et 3, de forme générale cylindrique ou conique et d'axe principal X axe horizontal correspondant à l'axe principal de l'aéronef selon l'exemple.

Le dispositif comprend de manière générale plusieurs moyens de retenue du réservoir, ces moyens se divisant en trois groupes, des premiers moyens destinés à soutenir le réservoir, un ou des deuxièmes moyens destinés à retenir une extrémité du réservoir dans une direction latérale perpendiculaire à l'axe principal X et un troisième moyen de retenue réalisant un point d'ancrage du réservoir par rapport au fuselage de l'aéronef.

Le dispositif comprend ainsi en premier lieu une paire de premiers moyens 2a, 2b, 2c, 2d de retenue du réservoir selon un axe Z à chacune d'une première 101 et d'une seconde 102 extrémité du réservoir. L'axe Z est selon l'exemple un axe vertical, les premiers moyens soutenant le réservoir dans le fuselage de l'aéronef.

La première paire de premiers moyens 2a, 2b est représentée sur la figure 2 et la seconde paire 2c, 2d est représentée sur la figure 3.

Les premiers moyens 2a, 2b, 2c, 2d comportent quatre bielles 30 agencées de façon symétrique par rapport à des plans de symétrie ZY et ZX du réservoir et orientées verticalement pour reprendre des accélérations du réservoir suivant l'axe vertical Z, l'axe Y étant un axe horizontal perpendiculaire aux axes X et Z.

Un exemple de bielle 30 applicable aux premiers moyens est représentée à la figure 5.

Elle comprend un corps et deux liaisons à rotule 53, 54 raccordés respectivement à une attache 103 du réservoir au travers d'un axe 51 et à une attache 11 au travers d'un axe 52 sur un cadre 1 de l'aéronef.

Les bielles sont positionnées de façon à travailler tangentiellement à la peau du réservoir 100 de sorte à éviter tout poinçonnement de ce dernier qui serait hautement néfaste à son intégrité.

Les éléments de supportage de type bielles doivent avoir à la fois de bonnes caractéristiques de tenue en traction et en compression de par la diversité des cas de charges pouvant être rencontrés. Par contre, elles ne doivent pas présenter de résistance perpendiculairement à leur axe de travail.

Les attaches 103 sont selon l'exemple réalisées sur des cerclages 104 en périphérie des extrémités 101, 102 du réservoir.

De retour aux figures 2 et 3 les points de fixation desdites quatre bielles 30 au réservoir 100 sont localisés dans le plan de symétrie XY du réservoir conformément au repère orthonormé 200.

Toujours selon la figure 2, le dispositif de l'invention comporte, à la première extrémité 101 du réservoir, un deuxième moyen 3 de retenue du réservoir selon un axe horizontal Y perpendiculaire à l'axe principal.

Le deuxième moyen 3 de retenue qui va servir à empêcher la rotation du réservoir autour de l'axe Z et un déplacement du réservoir en Y à sa première extrémité est constitué selon l'exemple par une bielle haute à l'avant du réservoir 100, positionnée dans le plan XY et reprenant les efforts suivant l'axe Y transverse à l'axe principal X du réservoir 100.

La bielle haute positionnée dans le plan XY est orientée en sorte d'autoriser des déformations du réservoir selon l'axe X tout en permettant un débattement radial du réservoir pour ne pas générer de contraintes dues aux déformations thermiques radiales du réservoir. Enfin, le point de fixation de la bielle haute sur le réservoir est dans le plan de symétrie XZ du réservoir.

Il y a lieu de noter que les premiers moyens comportant les premières bielles empêchent la rotation du réservoir autour de son axe.

D'un point de vue fonctionnel, à la première extrémité du réservoir, les bielles 30 des premiers et deuxième moyens de support définissent trois points de fixation répartis au sommet et des deux côtés de la première extrémité 101 du réservoir comme représenté aux figures 4A et 4B.

L'ensemble de ces points de fixation autorisent un déplacement longitudinal selon l'axe X de l'avant du réservoir selon ses dilatations/contractions.

Pour réaliser une fonction de tolérance de panne ou de sécurité en cas de défaillance (fail safe en anglais), un second deuxième moyen de support peut en outre être ajouté pour créer une redondance en cas de rupture de la bielle haute ou de ses points de fixation.

Ce moyen peut soit être une seconde bielle haute 3a comme dans la figure 4A, soit une bielle basse 3b selon la figure 4B et sera positionné d'un même côté du réservoir que le deuxième moyen dans le cas de l'exmple représenté.

Pour ce qui concerne les premiers moyens de retenue auxquels le réservoir est suspendu, la présence de deux paires de moyens est intrinsèquement redondant puisqu'en cas de rupture d'une bielle les trois bielles restantes suffisent à retenir le réservoir selon l'axe Z.

Les premiers moyens sont ainsi agencées de façon symétrique par rapport aux plans de symétrie ZY et ZX du réservoir et orientées verticalement pour reprendre les accélérations suivant l'axe Z. Pour limiter les charges au minimum, les points de fixation des bielles au réservoir sont localisés dans le plan de symétrie XY du réservoir. Les bielles comportent des rotules à chacune de leurs extrémités au niveau de la fixation avec le réservoir et au niveau de la fixation avec la structure porteuse, pour autoriser les dilatations thermiques différentielles. Leur orientation favorise en priorité les déformations relatives dans le sens longitudinal, mais elle permette également un débattement suffisant pour ne pas générer de contraintes dues aux déformations thermiques radiales. Ces 4 bielles constituent un assemblage a tolérance de panne vis-à-vis de la reprise des efforts suivant l'axe Z.

Le dispositif est ainsi constitué d'un ensemble de bielles munies de fixations à rotules, en nombre limité, agencées de sorte à ce que le montage soit le plus isostatique possible tout en assurant des redondances de passage d'efforts.

Le dispositif est complété à la seconde extrémité du réservoir par un troisième moyen de retenue à rotule 4 autour de l'axe vertical relié à la seconde extrémité 102 du réservoir.

Ce moyen de retenue à rotule sphérique, qui reprend seul la totalité des efforts dans le sens avion est plus particulièrement représenté à la figure 6.

Ce moyen ou dispositif de retenue a pour objet de retenir le réservoir dans une direction X selon l'axe principal avant arrière de l'aéronef et selon l'axe Y perpendiculaire à l'axe Y.

Ce moyen complète le deuxième moyen pour retenir le réservoir latéralement et réalise un point d'ancrage du réservoir dans la direction longitudinale X de l'aéronef.

Selon l'exemple représenté et comme il va être expliqué ci-dessous, ce moyen de retenue est réalisé avec un dispositif de retenue qui comporte un degré de liberté en rotation autour de cet axe X un degré de liberté en translation selon un axe Z perpendiculaire au plan de voilure de l'aéronef et un degré de liberté en rotation autour dudit axe Z.

Ce troisième moyen de retenue constitue un point fixe en X du réservoir par rapport à l'avion alors que les premiers et deuxième moyens sont réalisés en sorte d'accompagner les dilatations ou rétractions du réservoir.

Les efforts suivant l'axe Y sont repris par la bielle haute 3 positionnée horizontalement à l'avant et une tige 20 positionné en partie arrière en bas du réservoir.

La reprise des efforts de vol dans le sens X se fait au niveau du troisième moyen de retenue réalisé par un point d'attache unique constitué par la tige 20 positionnée en partie arrière basse du réservoir.

Ce point d'attache est le seul point fixe du réservoir par rapport à l'axe longitudinal X de sorte que les importantes déformations thermiques différentielles entre le réservoir et la structure avion sont autorisées au niveau des autres attaches, sans générer de contraintes thermomécaniques sur le réservoir ou les points d'attache.

Le troisième moyen de retenue comporte la tige verticale 20 fixée sur un bâti 12 de l'avion et emmanché dans une liaison à glissière 21 entourée d'une rotule sphérique 22 en bout d'une jupe 23 solidaire du réservoir 100.

Le bâti assure la transmission des efforts depuis l'axe jusque dans le fuselage de l'avion et l'axe vertical reprend les efforts suivant les axes X et Y tout en étant libre en rotation et libre en translation suivant l'axe Z entre des butées.

La tige 20 s'oppose à une translation du réservoir selon les axes X et Y, le moyen de retenue étant par contre complété par une liaison rotule qui lie le réservoir à la tige verticale en translation mais lui offre trois degrés de liberté selon les trois rotations ce qui assure un découplage du réservoir par rapport à ce premier moyen de retenue en tangage, en roulis et en lacet.

En résumé, la tige de fixation 20 est emmanchée dans une liaison à glissière 21 entourée d'une rotule sphérique 22 en bout d'une jupe 23 solidaire du réservoir 100, le bâti assure la transmission des efforts depuis la tige jusque dans le fuselage de l'avion et la liaison à glissière et rotule reprend les efforts suivant les axes X et Y horizontaux ou dans un plan parallèle au plan de la voilure de l'aéronef, tout en étant libre en rotation et libre en translation autour de la tige 20 suivant l'axe Z vertical perpendiculaire au plan de la voilure de l'aéronef.

Les figures 7A et 7B détaillent le moyen articulé représenté en figure 6.

En figure 7A est représenté le positionnement de l'axe 20 dans un palier formant la liaison à glissière 21 alors que selon la figure 6, la liaison à glissière 21 représentée est plutôt une liaison à billes. Le palier est inséré dans l'anneau à profil extérieur sphérique 22a de la rotule sphérique 22.

La figure 7B détaille un exemple de réalisation de la rotule sphérique qui comporte l'anneau à profil extérieur sphérique 22a reçue de manière connue en soit dans une cage extérieure 22b à profil intérieur sphérique ici sous forme connue d'un anneau inférieur et d'un anneau supérieur. La cage extérieure 22b dans laquelle est montée est reçue dans un logement réalisé dans la jupe 23 solidaire du réservoir.

D'une certaine manière on peut considérer que le réservoir est accroché sur la tige 20 tout en pouvant pivoter dans toutes les directions autour de son point d'accrochage, le point d'accrochage pouvant en outre coulisser le long de la tige. Le dispositif de retenue est ainsi adapté à réaliser un point d'ancrage du réservoir dans l'aéronef, des moyens de retenue complémentaires réalisés ici par les bielles des premiers et deuxième moyens maintenant le réservoir en alignement avec le fuselage de l'aéronef.

Les bielles qui sont fixées au réservoir et au fuselage au moyen d'axes libres en rotation sont disposées en sorte de permettre au réservoir de se dilater ou se contracter librement.

Le caractère à tolérance de panne de cette liaison est garanti par une redondance de sécurité du troisième moyen de retenue réalisée en réalisant la tige 20 sous forme d'un axe double comportant une partie externe et une partie interne de sorte que si la partie externe de l'axe venait à casser, la partie interne permettrait encore de reprendre les efforts de cisaillement.

La figure 7B représente en perspective l'axe double qui comporte la tige interne 20a et le tube 20b externe concentriques et emmanchés l'un dans l'autre.

En outre, un pion 24 passant dans un trou 25 avec jeu situé sur la jupe 23, entre la tige verticale 20 et le réservoir, le pion étant inséré dans un support 26 fixé au fuselage en sorte de retenir le réservoir en X et en Y sur rupture de la jupe 23 côté réservoir.

Le bâti structural 12, qui constitue le support de la liaison côté fuselage et qui peut éventuellement être réalisé sous forme d'un caisson, comporte deux brides 121, 122 capables chacune de reprendre la totalité des efforts de la tige 20 ce qui participe aussi à la sécurité du dispositif.

Côté structure avion, la solution ne nécessite pas ou peu d'éléments structuraux dédiés, le bâti se reprenant sur des cadres 1 du fuselage 10.

De retour à la figure 5, les bielles sont accrochées sur des cadres existants ou entre deux cadres sur des voiles amortisseurs additionnels ou des portions de cadres additionnels.

L'idéal est bien sûr de positionner les cadres à la définition de l'architecture de la structure avion pour que ces derniers coïncident avec les interfaces avec les réservoirs ce qui donne une conception cohérente de la structure avion/réservoirs.

A noter que ce système offre une grande flexibilité dans le positionnement des réservoirs dans le fuselage. Les réservoirs ne sont par exemple pas contraints de se situer à proximité d'un fond pressurisé ou de tout autre structure forte.

Selon la configuration retenue les moyens de retenue présentent un agencement optimal pour un réservoir dont les cas de charges principaux sont des accélérations dans le sens transverse au réservoir et vers le bas et des accélérations dans le sens longitudinal réservoir. Il est possible aussi de concevoir le système avec des bielles Z travaillent en compression à au moins à une extrémité du réservoir. C'est un mode de réalisation toutefois moins optimal.

Selon l'exemple, la première extrémité du réservoir est positionnée à l'avant de l'avion et la seconde extrémité à l'arrière et le positionnement relatif du deuxième moyen 3 et du troisième moyen 4 une en haut à l'avant, une en bas à l'arrière par rapport à l'avion est optimal pour équilibrer les efforts radiaux et limiter les moments induits. Une configuration inverse reste toutefois possible.

Comme les bielles verticales, la bielle haute du deuxième moyen est pourvue de rotules à ses deux extrémités et orientée pour favoriser en priorité les déformations relatives dans le sens longitudinal, tout en permettant un débattement suffisant pour ne pas générer de contraintes dues aux déformations thermiques radiales. Pour un comportement optimal, le point de fixation de cette bielle sur le réservoir doit être dans le plan de symétrie XZ du réservoir.

L'ensemble des dispositions décrites ci-avant permettent de limiter les charges à la fois dans le réservoir et dans la structure avion, ainsi que dans les fixations en elle-même. La masse globale est ainsi elle-même optimisée.

L'agencement, le nombre et le design des attaches assure une configuration globalement sécurisé en cas de défaillance (configuration "fail-safe").

La limitation du nombre d'attaches, et leur simplicité, assure par ailleurs des opérations rapides et aisées d'intégration des réservoirs dans le fuselage ou de démontage pour les opérations de maintenance, même pour des diamètres de réservoirs proches du diamètre fuselage. Pour cette même raison, l'inspection est facilitée via quelques trappes de visite judicieusement positionnées et pourra être réalisée aussi souvent que nécessaire, à chaque vol si besoin.

le réservoir est notamment un réservoir cryogénique d'alimentation d'un moteur fusée de l'avion spatial, les moyens de retenue étant configurés pour fournir des degrés de liberté adaptés à éviter des contraintes thermomécaniques sous l'effet des déformations thermiques différentielles dans le sens longitudinal, raccourcissement du réservoir, et radialement au réservoir, notamment striction du réservoir.

Le nombre limité de points de liaisons entre le réservoir cryogénique et la structure porteuse, qui plus est de dimensions réduites, permet enfin de limiter les échanges thermiques entre ces deux éléments.

Le dispositif de l'invention offre une optimisation de la masse globale sur l'ensemble réservoir, structure avion et supportage. Ce dispositif assure également une réduction notable des temps de maintenance et de dépose en réduisant au minimum nécessaire le nombre d'interfaces avec le réservoir.

Ce dispositif assure en outre que les fixations du réservoir ne créeront pas de contraintes sur ce dernier lors de ses dilatations et contractions en fonction de sa température.

L'invention n'est pas limitée à l'exemple représenté et notamment l'orientation des bielles peut varier suivant l'orientation des principaux efforts de dimensionnement spécifiques au véhicule considéré et à son profil de vol.

## Revendications

1. Ensemble constitué d'un réservoir (100) de forme générale cylindrique ou conique et d'axe principal X pour un véhicule tel qu'un aéronef et d'un dispositif de support et de maintien du réservoir, comprenant une paire de premiers moyens (2a, 2b, 2c, 2d) de retenue du réservoir selon un axe Z perpendiculaire à l'axe principal X à chacune d'une première (101) et d'une seconde (102) extrémité du réservoir, un deuxième moyen (3) de retenue du réservoir selon un axe Y perpendiculaire à l'axe principal X et à l'axe Z, à la première (101) extrémité du réservoir et un troisième moyen de retenue adapté à retenir le réservoir selon l'axe X et l'axe Y et relié à la seconde extrémité (102) du réservoir, **caractérisé en ce que** ledit troisième moyen de retenue est réalisé par un point d'attache unique comportant une tige de fixation (20) emmanchée dans une liaison à glissière (21) entourée d'une rotule sphérique (22).

2. Ensemble selon la revendication 1, pour lequel ledit troisième moyen de retenue comporte un degré de liberté en rotation autour de l'axe X, un degré de liberté en translation selon l'axe Z et un degré de liberté en rotation autour dudit axe Z.

3. Ensemble selon la revendication 1 ou 2, qui comprend en outre un second deuxième moyen (3a, 3b) de retenue selon l'axe Y à la première extrémité du réservoir afin de constituer un moyen de retenue redondant de sécurité.

4. Ensemble selon la revendication 1, 2 ou 3, pour lequel les premiers moyens (2a, 2b, 2c, 2d) et le deuxième moyen (3, 3a, 3b) sont constitués par des bielles (30) fixées au réservoir au moyen d'axes (51) libres en rotation et disposées en sorte de permettre au réservoir de se dilater ou se contracter librement.

5. Ensemble la revendication 4, pour lequel à la première extrémité du réservoir, les bielles (30) définissent trois points de fixation répartis au sommet et des deux côtés de la première extrémité (101) du réservoir.

6. Ensemble selon l'une quelconque des revendications précédentes, pour lequel les premiers moyens (2a, 2, 2c, 2d) comportent quatre bielles (30) agencées de façon symétrique par rapport à des plans de symétrie ZY et ZX du réservoir et orientées selon l'axe Z pour reprendre des accélérations du réservoir suivant l'axe Z.

7. Ensemble selon la revendication 6, pour lequel les points de fixation desdites quatre bielles (30) au réservoir (100) sont localisés dans le plan de symétrie XY du réservoir.

8. Ensemble selon l'une quelconque des revendications précédentes, pour lequel le deuxième moyen (3) de retenue est constitué par une bielle à l'avant du réservoir (100), positionnée dans le plan XY et reprenant les efforts suivant l'axe Y transverse à l'axe principal X du réservoir (100).

9. Ensemble selon la revendication 8, pour lequel la bielle positionnée dans le plan XY, et les bielles orientées suivant l'axe Z, sont positionnées en sorte d'autoriser des déformations du réservoir selon l'axe X tout en permettant un débattement radial du réservoir pour ne pas générer de contraintes dues aux déformations thermiques radiales du réservoir.

10. Ensemble selon la revendication 8 ou 9, pour lequel le point de fixation de la bielle positionnée dans le plan XY sur le réservoir est dans le plan de symétrie XZ du réservoir.

11. Ensemble selon l'une quelconque des revendications précédentes, pour lequel les bielles sont positionnées de façon à travailler tangentiellement à la peau du réservoir (100).

12. Aéronef comportant un ensemble selon l'une quelconque des revendications précédentes, pour lequel l'axe principal X est un axe horizontal parallèle à l'axe aéronef, ou présentant un angle faible par rapport à l'axe aéronef, l'axe Y est un axe horizontal transverse à l'aéronef et l'axe Z est un axe vertical les premiers et deuxième moyens étant repris sur des cadres (1) du fuselage (10) de l'aéronef.

13. Aéronef selon la revendication 12, pour lequel le réservoir est suspendu aux premiers moyens de retenue.

14. Aéronef selon la revendication 12 ou 13, pour lequel les premiers et deuxième moyens de retenue sont des bielles fixées par des liaisons à rotule (53, 54) à des attaches (103) du réservoir et des attaches (11) sur des cadres (1) de l'aéronef, ou sur des voiles amortisseurs entre cadres.

15. Aéronef selon la revendication 12, 13 ou 14, pour lequel la tige de fixation (20) du troisième moyen de retenue est fixée sur un bâti (12) de l'aéronef et la rotule sphérique (22) est en bout d'une jupe (23) solidaire du réservoir (100), pour lequel le bâti assure la transmission des efforts depuis la tige jusque dans le fuselage de l'aéronef et pour lequel la liaison à glissière reprend les efforts suivant les axes X et Y, tout en étant complètement libre en rotation et libre en translation autour de la tige (20) suivant l'axe Z vertical.

16. Aéronef selon la revendication 15, comportant une redondance de sécurité du troisième moyen de retenue.

17. Aéronef selon la revendication 16, pour lequel la redondance est réalisée par un dispositif pion (24), trou (25) avec jeu situé entre la jupe (23), entre l'axe vertical et le réservoir, et un support (26) fixé au fuselage en sorte de retenir le réservoir en X et en Y sur rupture de l'axe vertical ou de la jupe côté réservoir.

18. Aéronef selon l'une quelconque des revendications 12 à 17, pour lequel l'aéronef est un aéronef spatial et le réservoir (100) est un réservoir cryogénique d'alimentation d'un moteur fusée de l'aéronef spatial, les moyens de retenue étant configurés pour fournir des degrés de liberté adaptés à éviter des contraintes thermomécaniques sous l'effet des déformations thermiques différentielles dans le sens longitudinal et radial du réservoir.

19. Aéronef spatial selon l'une quelconque des revendications 12 à 18, pour lequel le bâti (12) comporte une double bride.

## Patentansprüche

1. Anordnung, bestehend aus einem zylinderförmigen bzw. konischen Tank (100) mit einer Hauptachse X für ein Fahrzeug, wie etwa ein Luftfahrzeug, und aus einer Vorrichtung zum Tragen und Halten des Tanks, enthaltend ein Paar erster Mittel (2a, 2b, 2c, 2d) zum Halten des Tanks entlang einer zur Hauptachse X senkrechten Achse Z jeweils an einem ersten (101) und einem zweiten Ende (102) des Tanks, ein zweites Mittel (3) zum Halten des Tanks entlang einer senkrecht zur Hauptachse X und zur Achse Z verlaufenden Achse Y am ersten Ende (101) des Tanks und ein drittes Haltemittel, das dazu geeignet ist, den Tank entlang der Achse X und der Achse Y zu halten und das mit dem zweiten Ende (102) des Tanks verbunden ist,
**dadurch gekennzeichnet, dass**
das dritte Haltemittel aus einem einzigen Befestigungspunkt gebildet ist, der eine Befestigungsstange (20) enthält, die in eine von einem Kugelgelenk (22) umgebene Gleitverbindung (21) eingesetzt ist.

2. Anordnung nach Anspruch 1, wobei
das dritte Haltemittel einen Freiheitsgrad zum Verdrehen um die Achse X, einen Freiheitsgrad zum Verschieben entlang der Achse Z und einen Freiheitsgrad zum Verdrehen um die Achse Z aufweist.

3. Anordnung nach Anspruch 1 oder 2,
ferner enthaltend ein zweites Haltemittel (3a, 3b) zum Halten entlang der Achse Y an dem ersten Ende des Tanks, um ein redundantes Sicherheitshaltemittel bereitzustellen.

4. Anordnung nach Anspruch 1, 2 oder 3, wobei
die ersten Mittel (2a, 2b, 2c, 2d) und das zweite Mittel (3, 3a, 3b) aus Verbindungsstangen (30) bestehen, die mit Hilfe von frei drehbaren Achsen (51) am Tank befestigt und so angeordnet sind, dass sich der Tank frei ausdehnen bzw. zusammenziehen kann.

5. Anordnung nach Anspruch 4, wobei
am ersten Ende des Tanks die Verbindungsstangen (30) drei Befestigungspunkte definieren, die oben und auf beiden Seiten des ersten Endes (101) des Tanks verteilt sind.

6. Anordnung nach einem der vorangehenden Ansprüche, wobei
die ersten Mittel (2a, 2, 2c, 2d) vier Verbindungsstangen (30) enthalten, die symmetrisch in Bezug auf die Symmetrieebenen ZY und ZX des Tanks angeordnet und entlang der Achse Z ausgerichtet sind, um die Beschleunigungen des Tanks entlang der Achse Z aufzunehmen.

7. Anordnung nach Anspruch 6, wobei
die Befestigungspunkte der vier Verbindungsstangen (30) am Tank (100) sich in der Symmetrieebene XY des Tanks befinden.

8. Anordnung nach einem der vorangehenden Ansprüche, wobei
das zweite Haltemittel (3) aus einer Verbindungsstange an der Vorderseite des Tanks (100) besteht, die in der Ebene XY angeordnet ist und Kräfte entlang der Achse Y quer zur Hauptachse X des Tanks (100) aufnimmt.

9. Anordnung nach Anspruch 8, wobei
die in der Ebene XY positionierte Verbindungsstange und die entlang der Achse Z ausgerichteten Verbindungsstangen so positioniert sind, dass sie Verformungen des Tanks entlang der Achse X ermöglichen und dabei gleichzeitig eine radiale Auslenkung des Tanks zulassen, um keine Spannungen aufgrund von radialen thermischen Verformungen des Tanks zu erzeugen.

10. Anordnung nach Anspruch 8 oder 9, wobei
der Befestigungspunkt der in Ebene XY positionierten Verbindungsstange an dem Tank in der Symmetrieebene XZ des Tanks liegt.

11. Anordnung nach einem der vorangehenden Ansprüche, wobei
die Verbindungsstangen so positioniert sind, dass sie tangential zur Tankhaut des Tanks (100) wirken.

12. Luftfahrzeug mit einer Anordnung nach einem der vorangehenden Ansprüche, wobei
die Hauptachse X eine parallel zur Achse des Luftfahrzeugs verlaufende horizontale Achse ist oder einen geringen Winkel mit der Achse des Luftfahrzeugs einschließt, wobei die Achse Y eine quer zum Luftfahrzeug verlaufende horizontale Achse ist und die Achse Z eine vertikale Achse der ersten Mittel und des zweiten Mittels ist, die auf Spanten (1) des Luftfahrzeugrumpfes (10) verteilt sind.

13. Luftfahrzeug nach Anspruch 12, wobei
der Tank an den ersten Haltemitteln aufgehängt ist.

14. Luftfahrzeug nach Anspruch 12 oder 13, wobei
die ersten Haltemittel und das zweite Haltemittel Verbindungsstangen sind, die über Gelenkverbindungen (53, 54) mit Befestigungen (103) des Tanks und Befestigungen (11) an den Spanten (1) des Luftfahrzeugs oder an Dämpfungsholmen zwischen den Spanten befestigt sind.

15. Luftfahrzeug nach Anspruch 12, 13 oder 14, wobei
die Befestigungsstange (20) des dritten Haltemittels an einem Rahmen (12) des Luftfahrzeugs befestigt ist und das Kugelgelenk (22) sich am Ende einer mit dem Tank (100) fest verbundenen Schürze (23) befindet, wobei der Rahmen die Übertragung der Kräfte von der Stange in den Luftfahrzeugrumpf sicherstellt und die Gleitverbindung die Kräfte entlang der Achsen X und Y aufnimmt und dabei völlig frei um die Stange (20) entlang der vertikalen Achse Z rotieren und sich verschieben kann.

16. Luftfahrzeug nach Anspruch 15,
umfassend eine Sicherheitsredundanz für das dritte Haltemittel.

17. Luftfahrzeug nach Anspruch 16, wobei
die Redundanz durch eine Bolzenvorrichtung (24), eine Lochung (25) mit Spiel zwischen der Schürze (23), zwischen der vertikalen Achse und dem Tank und eine am Rumpf befestigte Halterung (26) erreicht wird, um den Tank bei Bruch der vertikalen Achse oder der tankseitigen Schürze bei X und Y festzuhalten.

18. Luftfahrzeug nach einem der Ansprüche 12 bis 17, wobei
das Luftfahrzeug ein Raumfahrzeug ist und der Tank (100) ein kryogener Tank zur Versorgung eines Raketentriebwerks des Raumfahrzeugs ist, wobei die Haltemittel dazu ausgelegt sind, Freiheitsgrade bereitzustellen, die dazu geeignet sind, thermomechanische Spannungen aufgrund unterschiedlicher thermischer Verformungen in Längs- und Radialrichtung des Tanks zu vermeiden.

19. Raumfahrzeug nach einem der Ansprüche 12 bis 18, wobei
der Rahmen (12) doppelt geflanscht ist.

## Claims

1. Assembly formed from a generally cylindrical or tapered tank (100) and having a main axis X for a vehicle such as an aircraft and a device for mounting and supporting the tank, comprising a pair of first means (2a, 2b, 2c, 2d) for retaining the tank along an axis Z perpendicular to the main axis X on each of a first (101) and second (102) end of the tank, a second means (3) for retaining the tank along an axis Y perpendicular to the main axis X and to the axis Z, on the first (101) end of the tank and a third means for retaining adapted to retain the tank along the axis X and the axis Y and connected to the second end (102) of the tank, **characterised in that** said third means for retaining is carried out by a single attachment point including a fastening rod (20) fitted into a slide connection (21) surrounded by a ball joint (22)

2. Assembly according to claim 1, for which said third means for retaining includes a degree of rotational freedom about the axis X, a degree of translational freedom along the axis Z and a degree of rotational freedom about said axis Z.

3. Assembly according to claim 1 or 2, which further comprises a second means for retaining (3a, 3b) along the axis Y on the first end of the tank so as to form a redundant safety means for retaining.

4. Assembly according to claim 1, 2 or 3, for which the first means (2a, 2b, 2c, 2d) and the second means (3, 3a, 3b) are formed by connecting rods (30) fastened to the tank by means of freely-rotating shafts (51) and disposed in such a way as to allow the tank to freely expand or contract.

5. Assembly according to claim 4, for which on the first end of the tank, the connecting rods (30) define three fastening points distributed at the top and the two sides of the first end (101) of the tank.

6. Assembly according to any preceding claim, for which the first means (2a, 2, 2c, 2d) include four connecting rods (30) arranged symmetrically with respect to the planes of symmetry ZY and ZX of the tank and oriented along the axis Z in order to take up accelerations of the tank along the axis Z.

7. Assembly according to claim 6, for which the fastening points of said four connecting rods (30) to the tank (100) are located in the plane of symmetry XY of the tank.

8. Assembly according to any preceding claim, for which the second means for retaining (3) is formed by a connecting rod at the front of the tank (100), positioned in the plane XY and taking up the forces along the axis Y transversal to the main axis X of the tank (100).

9. Assembly according to claim 8, for which the connecting rod positioned in the plane XY, and the connecting rods oriented along the axis Z, are positioned in such a way as to authorise deformations of the tank along the axis X while still allowing for a radial deformation of the tank in order to not generate stresses due to the radial thermal deformations of the tank.

10. Assembly according to claim 8 or 9, for which the fastening point of the connecting rod positioned in the plane XY on the tank is in the plane of symmetry XZ of the tank.

11. Assembly according to any preceding claim, for which the connecting rods are positioned in such a way as to work tangentially to the skin of the tank (100).

12. Aircraft including an assembly according to any preceding claim, for which the main axis X is a horizontal axis parallel to the aircraft axis, or having a low angle with respect to the aircraft axis, the axis Y is a horizontal axis transversal to the aircraft and the axis Z is a vertical axis the first and second means being taken up on frames (1) of the fuselage (10) of the aircraft.

13. Aircraft according to claim 12, for which the tank is suspended from the first means for retaining.

14. Aircraft according to claim 12 or 13, for which the first and second means for retaining are connecting rods fastened by ball joint connections (53, 54) to fasteners (103) of the tank and fasteners (11) on frames (1) of the aircraft, or on damping shrouds between frames.

15. Aircraft according to claim 12, 13 or 14, for which the fastening rod (20) of the third means for retaining is fastened to a frame (12) of the aircraft and the ball joint (22) is at the end of a skirt (23) integral with the tank (100), for which the frame ensures the transmission of the forces from the rod to the fuselage of the aircraft and for which the slide connection takes up the forces along the axes X and Y, while still being completely free in rotation and free in translation about the rod (20) along the vertical axis Z.

16. Aircraft according to claim 15, including a safety redundancy of the third means for retaining.

17. Aircraft according to claim 16, for which the redundancy is carried out by a pin device (24), hole (25) with space located between the skirt (23), between the vertical axis and the tank, and a support (26) fastened to the fuselage in such a way as to retain the tank in X and in Y upon the rupture of the vertical axis or of the skirt on the tank side.

18. Aircraft according to any of claims 12 to 17, for which the aircraft is a spacecraft and the tank (100) is a cryogenic tank for supplying a rocket engine of the spacecraft, the means for retaining being configured to provide degrees of freedom suitable for preventing thermomechanical stresses under the effect of the differential thermal deformations in the longitudinal and radial direction of the tank.

19. Aircraft spatial according to any of claims 12 to 18, for which the frame (12) includes a double flange.
